# EUROPEAN PATENT SPECIFICATION

(11) **EP 1 975 752 B1**
(45) Date of publication and mention of the grant of the patent: **07.07.2010**
(21) Application number: 07105363.1
(22) Date of filing: 30.03.2007
(51) Int. Cl.: G05B 19/406, G05B 19/418, G05B 23/02, H04N 5/232, H04N 7/18, G08B 13/196

(54) **A method for operating remotely controlled cameras in an industrial process**
Verfahren zum Betrieb ferngesteuerter Kameras in einem industriellen Verfahren
Procédé pour commander des caméras télécommandées dans un procédé industriel

(43) Date of publication of application: 01.10.2008
(73) Proprietor: ABB Research Ltd., 8050 Zürich (CH)
(72) Inventor: Skourup, Charlotte, 3021 Drammen (NO); Husøy, Kristoffer, 0577 Oslo (NO); Graven, Tone-Grete, 1540 Nesoddtangen (NO)
(74) Representative: Dahlstrand, Björn

(56) References cited:
- WO-A-2006/074161
- WO-A-2006/128124
- DE-A1-102006 014 634
- US-A1- 2004 125 207

## Description

### TECHNICAL FIELD.

This invention describes a system and a method for engineering and operation of a video monitoring system from within an industrial control system. In particular the invention is concerned with calculating which cameras have an unobstructed line of sight to specific locations within the process plant by means of an accurate 3D model of the plant including all onsite equipment and the location of each camera or video surveillance camera.

### TECHNICAL BACKGROUND

In the field of process control in industrial plants there is a continual requirement for information about process equipment and process objects. As well as process monitoring equipment, temperature sensors, pressure sensors and so on, video imaging may be used to provide a real-time image of an object or a process. Display screens showing CCTV images (closed circuit television) may be arranged in a control room monitoring one or more parts of an industrial plant. CCTV images may be displayed showing parts of a process line or process equipment. US5,095,365 assigned to Hitachi, describes an abnormality monitoring system in which monitoring frequency is changed according to the operating state of devices to be monitored. Abnormalities may be determined by automatically comparing template images to current pictures produced by a CCTV camera.

US 20060241793 entitled Human-machine interface for a control room, assigned to ABB, describes an industrial control system in which access to a CCTV system is integrated into an industrial control system. By means of selection using a human-machine interface of the control system disclosed in the application, images from the CCTV system of an equipment, object or location selected may be displayed.

In current control rooms with CCTV monitoring and moveable cameras, an operator manually maneuvers a CCTV camera by remote control and through the use of a joystick, or a joystick-like device. Another alternative is to store all pre-defined positions in the cameras or directly as code in the process graphics during the engineering phase. These methods of controlling each CCTV camera are relatively cumbersome and laborious, particularly when the process is re-engineered. In addition, it is difficult for an operator to operate a CCTV camera to change a view and get a new object into view quickly, which may have implications for safety issues in critical situations.

In order to achieve automatic camera control today, a great amount of manual engineering is required. Any type of link between camera selection and positioning and control object or control event needs to be programmed into the system in advance, per control object or per control event. In most cases this is done by storing a number of positions in the camera. The control system can then be programmed to send a command to a specific camera when some event is detected. For example when a gas alarm is detected in area A, send command to camera 99 to move to position B. This means that the cameras may only be used to monitor automatically certain critical equipment that has been already identified in advance. If an area needs to be monitored that has not been configured in the system in advance, the operator will have to select the appropriate camera and redirect it to overlook this area manually. These limitations in current systems also greatly reduces its flexibility, as the size and complexity of the plant often increase requiring a greater number of number of cameras installed, which require more extensive configuration.

### SUMMARY OF THE INVENTION

According to an aspect of the present invention an improvement is provided in the form of an improved method for engineering and operating a system comprising of one or more remotely-controlled and stationary and moveable cameras in an industrial installation, by means of using a 3D-model comprising the industrial installation and the cameras including information about movement ranges of the cameras, and by automatically determining which one or more cameras are or can be moved to be in line of sight of a selected object.

According to an embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras to calculate which camera or cameras are in line of sight of the object, and by determining what camera movements and pan, tilt, zoom and focus settings are required in order for at least one of said one or more cameras to focus on the selected object.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras to calculate which camera or cameras are in line of sight of the object, and by ranking one or more cameras in line of sight of the selected object.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras 2 to calculate which camera or cameras are in line of sight of the object, and by moving, following an operator request, the camera automatically to point and focus on the selected object of interest.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras 2 to calculate which camera or cameras are in line of sight of the object, and by generating a request from a control system for moving the camera to point and focus on the selected object of interest which is any from the group of: alarm, event, process condition.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras 2 to calculate which camera or cameras are in line of sight of the object, and by the further step of recording the live video stream of the process object, or displaying it to an operator.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras 2 to calculate which camera or cameras are in line of sight of the object, and by the further step of displaying the live video stream or image of the process object, to an operator or other authorised user at a second location or at a location remote from the installation.

According to another embodiment of the present invention an improvement is provided in the form of an improved method for engineering and operating a system comprising of one or more remotely-controlled and stationary and moveable cameras in an industrial installation, by means of using a 3D-model comprising the industrial installation and the cameras 2 to calculate which camera or cameras are in line of sight of the object, and by the step of storing in a list information for each process object the one or more cameras determined to be in line of sight of the process object, together with the control information necessary to move each of the one or more cameras to point and focus on the object.

This invention describes a system and a method for automatic control of video cameras, industrial video cameras or CCTV systems within the process field. The control system automatically determines which of the video cameras are accessible and can be used to view a particular real-world object. Further the control system also automatically manoeuvers the selected camera, or cameras, to get an appropriate view of the object (eg by means of tilt, pan, zoom and focus commands).

The control system utilises a 3D model of the process in an industrial installation, including the positions of the video cameras in the installation, to decide which video camera has an unobstructed line of sight to a specific real-world object within the process plant. The 3D model comprises information about the real-world objects and equipment such as pumps, valves and meters in the process and, in addition, information about each of the video cameras such as their positions and how it can be moved, range of movement, zoom or focus capabilities, and so on.

The control system must know which object in the process to view, which cameras can view this object and how this camera much be positioned (tilt, pan, zoom and focus) so as to view the object. In case there are more cameras that can display an object, the most appropriate camera must be chosen. The 'most appropriate' can be, for example, the camera that has the best/closest view of the object, or it can be one or more of the cameras which are currently occupied by viewing another object.

This invention solves the problem using an accurate 3D model of the process. This 3D model includes all equipment and process objects, their positions, sizes and functionality. In addition the 3D model includes all video cameras including their positions and other characteristics, range of movement and so on. When the operator or the control system decides to view a particular real-life object within the process field, the control system automatically selects the video camera which is accessible and closest located or will result in the best view. The 3D model calculates the line of sight for each video camera, i.e. which of the video cameras that can actually view the particular real-life object. The control system automatically manoeuvers by eg tilt, pan and zoom movements the selected video camera or cameras to make an image and retrieve the best view of the object. The calculated line of sight is stored in the control system for later use.

An important part of this invention lies in the automatic configuration of a video camera system. When either the number of cameras or the number of process objects is large, the configuration of the system becomes quite complex and time consuming. By using a 3D model of the plant and all video cameras, the system can automatically determine if an object can be viewed from one or more of the cameras, and if yes: how to orient and zoom the cameras in order to view the process objects. This can be determined by using the 3D model, and the correct parameter settings for the camera can then be applied to the real-world cameras to view the real-world process object.

The invention proposes to control CCTV cameras automatically to view real-world objects within the process based on an integrated 3D model of the process which also holds information about the CCTV cameras and their potential working area. Whether a particular video camera can view an object is decided run-time based on information from the 3D model. The control system automatically determines the line of sight from a particular video camera to the object. The specific line of sight so determined to the object is then stored within the control system for later use. In the case when there have been modifications to the real-world process, the 3D model has to be updated accordingly. An indicator within the control system may be used to signal that the line of sight has to be re-calculated.

An important advantage of the invention is that it may be used to capture images of a process or process object efficiently, simply and quickly. An image of a process object may be carried out automatically, including camera selection, camera movement, image capture and then display, so that an operator who may be concerned about a critical situation can concentrate on control aspects instead of having to select the best situated camera and maneuver it to make an image of the process. This also reduces the time necessary to get an object into view, which is a safety issue in critical situations.

Another advantage is that the invention may be used to simply and quickly capture images by any authorised operator on duty in the plant, as detailed knowledge of physical plant layout and equipment position is not required. Only a selection of a process or process object of interest, for example as a result of an event or alarm. The most suitable camera is automatically selected and then moved and focussed on the object without any input from an operator being required. Instead of a separate system, console and bank of CCTV screens, real-time video streams from the plant may become an integrated part of the operator HMI.

Another advantage is that this solution is very robust and scalable. It can handle a relatively unlimited number of cameras and an almost infinite number of viewable objects. The inventive solution is easy to extend with new cameras and configure them; it is only camera related parameters that have to be to entered into the control system when automatic processing of line of sight to real-life objects is available.

It is necessary to update the 3D model to include modifications in the process configuration. Run-time computation of line of sight may be time-consuming for the first time and after each modification to a process object or location.

According to another aspect of the present invention an improvement is provided in the form of a 3-D model for operating one or more remotely-controlled stationary and moveable cameras, arranged with means to register input of a selection of an object of interest in an industrial installation, and means for determining from said 3-D model and a known position of one or more cameras in the model which camera or cameras are in line of sight of the process object, and means for remotely moving the camera to point and focus on the object of interest, and means for displaying an image or a video stream of the process object.

According to another embodiment of the present invention an improvement is provided in the form of an improved 3-D model for operating one or more remotely-controlled stationary and moveable cameras, for determining from said 3-D model and a known position of one or more cameras in the model which camera or cameras are in line of sight of the process object, wherein the 3D model is implemented by a computer and computer software or programs and wherein the 3D model may be implemented by a computer assisted design program or by a computer graphics program.

According to another aspect of the present invention an improvement is provided in the form of control system for operating one or more remotely-controlled moveable and stationary cameras, comprising means for remotely moving the camera to point and focus on an object of interest, arranged with input means to register input of a selection of a said object of interest in an industrial installation, and means for determining from a 3-D model and a known position of one or more cameras in the model which are in line of sight of the process object, and means for remotely moving the camera to point and focus on the object of interest, and means for displaying an image of the process object.

Another advantage is to have a unified interface, human-machine interface HMI, for CCTV through, for example, automation system-like faceplates or other forms of graphical display. A further advantage is the ability for an operator to control the movement of the camera from the process graphics. An example of how this could be used is this: when an operator right-clicks an object in a process graphic he/she can choose to "view object in camera", which automatically presents a view of the object on a monitor. This involves the automatic system selecting which camera can be used to view the selected object (or which has the best view) and then manoeuvering the camera (pan/tilt/zoom) so the selected object is shown in view. Another advantage of this integration is that process events can be used to automatically initiate commands to the CCTV system. E.g. the control system may be configured to begin manoeuvring a camera in line of sight when a pre-determined event or an alarm occurs for this process, or process object.

In a preferred embodiment of the methods of the invention one or more methods may be carried out by a computing device comprising one or more microprocessor units or computers. The control unit(s) comprises memory means for storing one or more computer programs for carrying out the improved methods. Preferably such computer program contains instructions for the processor to perform the method as mentioned above and described in more detail below.

### BRIEF DESCRIPTION OF THE DRAWINGS

Embodiments of the invention will now be described, by way of example only, with particular reference to the accompanying drawings in which:
FIGURES 1a-d are schematic diagrams showing a layout and the relative position in space of cameras and objects for calculating whether an object is in line of sight of one or more cameras according to an embodiment of the invention,
FIGURE 2 is a flowchart for a preferred method of calculating line of sight to an object and camera position and storing the information about camera number and position, according to an embodiment of the invention,
FIGURE 3 is a flowchart an object to be viewed by means of for calculating line of sight between the object and a camera position by means of a 3-D model and storing the information about camera number and position, according to another embodiment of the invention.

### DETAILED DESCRIPTION OF THE EMBODIMENTS

This invention describes a method that has information available about which camera should be used to view an object and further, information to be able to calculate whether a given camera has a clear line of sight to that specific object. The method also determines the settings such as pan, tilt, zoom and focus for the camera. In case there are more cameras that can view an object, the most appropriate camera is selected.

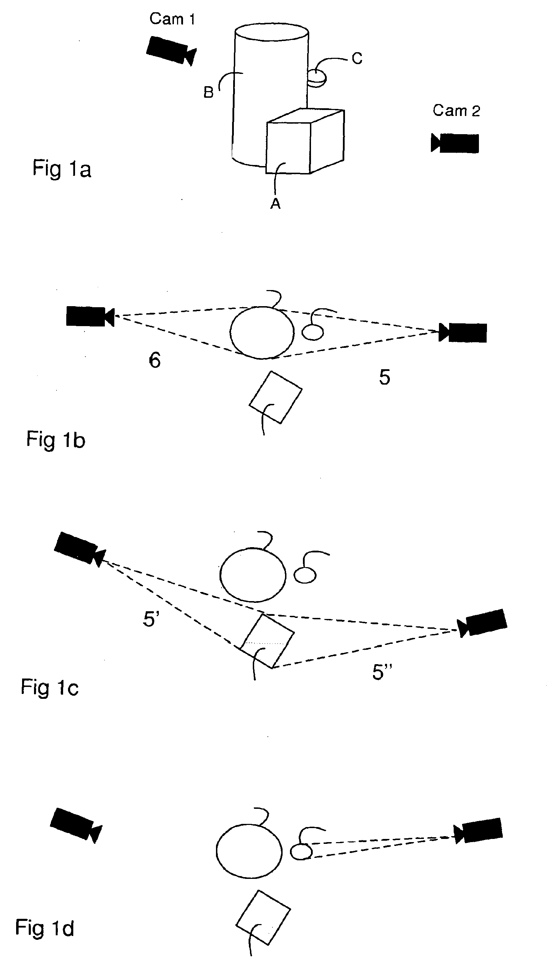

Figure 1 a shows a 3-D view of a group of objects A, B, or C representing equipment such as a tank or a building in an industrial installation, and two cameras 1, 2 positioned nearby. Object C represents an object of interest, which may be an item of equipment, a valve, a transformer and so on. Fig 1b shows a first view from above looking down on the objects. It is shown there that camera 1 in position 1 does not 6 have line of sight to object C, and that camera 2 at position 1 has line of sight 5 to object C. This may be calculated by a computer implemented method using a program for manipulating 3-D models. A computer model such as a model of the three schematic objects A, B, C and the two cameras 1, 2 and their respective position may be used to calculate the position of a line of sight between a camera at a defined position in space and an object at a defined position in space. Further, the available extent of movement for each camera is registered first to ensure that a camera at a position may be in line of sight, and secondly to calculate which movements, eg, pan, tilt, zoom are required for the selected camera to move to a position where the object of interest is in focus, or in focus and centered in an image. A 3-D computer graphics package or a computer program for manipulating CAD drawings (Computer Assisted Design) may be used to calculate line of sight within the computer model of the industrial installation or process plant of interest.

Figure 1 c shows a second view from above looking down on the objects. It shows a position of camera 1, position 2; and of camera 2 position 1 in which lines of sight 5' and 5" are available to object A. Figure d shows the case when camera 1 is not in line of sight of object C. Camera 2 at position 1 is in line of sight of C.

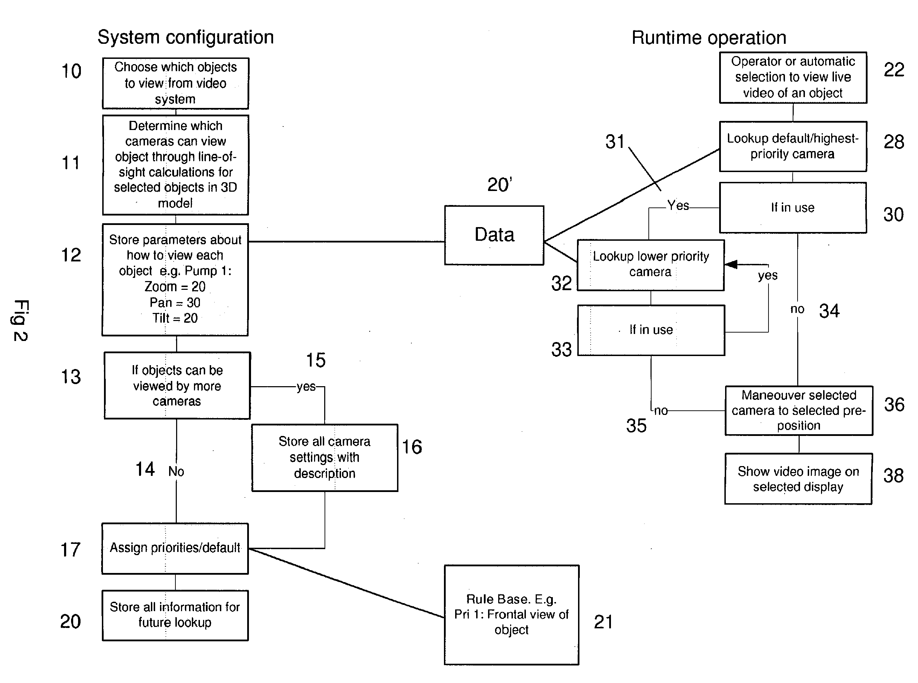

Figure 2 is a flowchart for to preferred method for remotely operating a camera automatically to make an image of an object in an industrial installation. The flowchart shows a series of steps comprising the actions during a configuration phase of:
10. Operator (or system, below) chooses which object to view from video system
11. Determine which cameras can view the object though line of sight calculations for selected objects represented in the 3D model
12. Store parameters for camera settings about how to view each object, eg Pump 1, Zoom=20, Pan=30, Tilt=10
13. Determine if the elected object can be viewed by more that one camera, if
15. Yes then
16. Store all settings for all cameras in for this object with a description,
17. Assign priorities for the different camera views and/or a default view for this object, may be a rule base such as Priority 1, Frontal view of object,
14. if No then decide priorities, default view,
20. Store all information per object for future lookup (see step 21)
and a series of steps comprising the actions during a runtime operation of:
22. Operator or automatic selection to view live video of an object
28. Lookup a default or highest priority camera for that object, by checking the Data 21 stored for cameras and stored camera parameters for viewing each object;
30. If the first camera is found to be in use:
   31. Yes
   32. Look up a lower priority camera
   33. If the second camera is in use then 32. Look up a lower priority camera
   35. if No then
   34. If NO, then
36. Maneouver the selected camera to the predetermined position for the selected object
38. Show video image on selected display

Thus the line of sight calculations are advantageously done beforehand during an engineering phase. Line of sight calculations can be carried out during runtime but this may take an inconvenient amount of time.

Thus a list of cameras and camera positions is made up and stored 20, 21 during a configuration phase. Based on the line of sight calculated by using the 3-D computer model, and based on the known parameters for each camera regarding their movement range in terms or pan, tilt or zoom, the system automatically stores the parameters necessary to steer the selected camera to point at the stored position of the object and focus. A priority and/or default list for which camera of a plurality of cameras that can view the object shall be selected to view the object may be constructed in different ways to suit one or more rule based schemes. It may be based on any combination of best image, largest image, type of current alarm, default selection and so on.

Any of the cameras in the plant may also be stationary cameras, in a fixed position, only capable of zoom and focus. The majority of cameras may be arranged as moveable in terms of pan, tilt and zoom, and the information recording the extent or limits of available movement for each camera is stored accessible from the model for calculating line of sight. Thus in the line of sight calculation the available range of movement of a camera may also be calculated or determined to establish whether the camera can be moved in to line of sight, and secondly the which movements the camera will have to make so as to point at and focus on the object. In addition, one or more cameras may be mounted on a moveable device, such as a crane or a robot or on a rail. Such a camera may then have movement forward or back in a linear direction as well as tilt and pan.

Normally an operator will choose an object 10 he/she wishes to view. However the invention may also be arranged in a further embodiment to automatically select and steer a camera to view a certain object on the occurrence of a pre-determined event or alarm. When the automatic camera control system is linked to the process control system, information about the alarm can advantageously be superimposed over the view of the object associated with the event or alarm. In this way the operator can see at once what kind of alarm it is as the camera starts focus on and/or move to the object.

In an advantageous development the 3-D model may be used to calculate where a camera shall be positioned. When there is, for example, a safety requirement that redundancy is required, such as that two cameras are positioned within line of sight of a process equipment or other type of process object, the 3-D model may be used to calculate, through analysis of line of sight modeling and calculation, the possible positions from which a first and/or second camera would have line of sight to the object. The invention may thus be used to determine best position for an additional camera. The invention may also be used to calculate an optimal positioning or an optimum position to fulfill requirements for video coverage such as for security purposes or to comply with hazardous materials.

### (text mention of moving object)

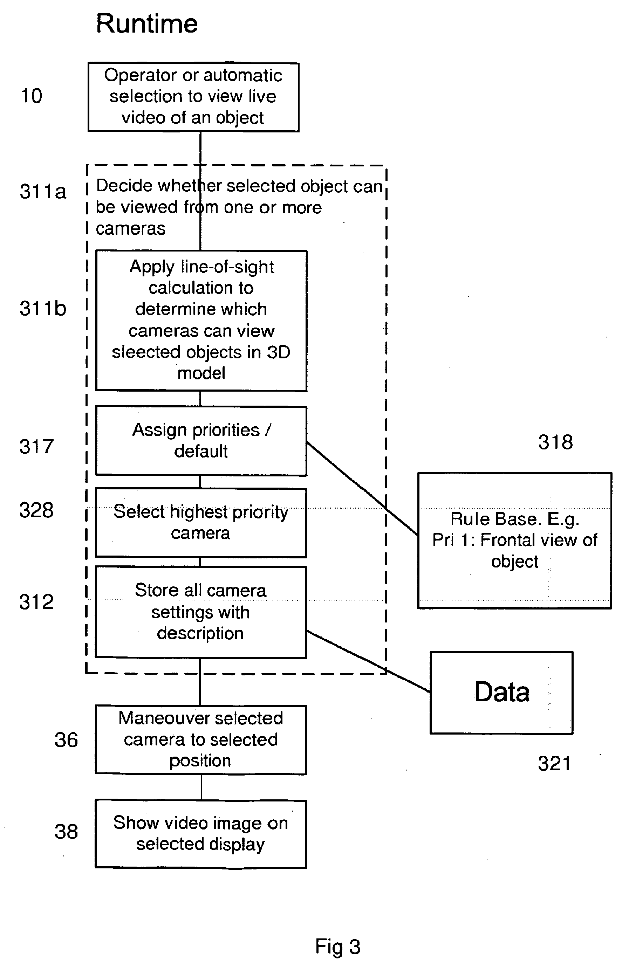

In an alternative embodiment the invention may be applied using a different sequence of method steps. For example FIGURE 3 shows a flowchart in which the steps are numbered with the same reference numbers when the operation is the same as Figure 2, and where the steps are in a different sequence, the similar steps are shown numbered with numbers in the 300 range:
10. Operator or system selects to view a live video of an object
211a. Decide whether the selected object can be viewed from one or cameras
   211b. Apply line of sight calculation to determine which cameras can view selected objects represented in the 3D model
   217. Assign priorities for the different camera views and/or a default view for this object,
      218. may be a rule base such as Priority 1, Frontal view of object, such as checking - is the camera in use by other operator,
   328. Select highest priority camera for that object
   312. Store parameters for camera settings about how to view each object, eg Pump 1, Zoom=20, Pan=30, Tilt=10
      321. Store all parameters for camera settings with description
36. Maneouver the selected camera to the predetermined position for the selected object
38. Show video image on selected display

The above description in relation to Figure 3 is applicable to a sequence of actions initiated by an operator, or automatically by a system when pre-determined conditions are fulfilled. It may be understood that an operator at a control panel for controlling the CCTV cameras, or at a control interface which is connected to or integrated with an interface of a control system, selects an object that he/she wants to view and that the system remotely controlling the CCTV cameras then automatically provides an image or a live video stream of that object. If the object has not been viewed or configured previously, then line of sight calculations are carried out in real time and the image or video is displayed subsequently. If the object has not been viewed or configured previously, the real-time line of sight calculations can be stored for future reference.

Methods of the invention may be supervised, controlled or carried out by one or more computer programs. One or more microprocessors (or processors or computers) comprise a central processing unit CPU connected to or comprised in one or more of the above computers or computer systems, which processors or computers perform the steps of the methods according to one or more aspects of the invention, as described for example in reference to Figure 2 and Figure 3. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations, synchronisations and the like for the methods previously described. A part of the program may be stored in a processor as above, but also in a ROM, RAM, PROM, EPROM or EEPROM chip or similar memory means. The or some of the programs in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as memory stick, a USB memory stick and other removable flash memories, hard drives etc. may also be used. The program may also in part be supplied or updated from a data network, including a public network such as the Internet.

It should be noted that while the above describes exemplifying embodiments of the invention, there are several variations and modifications which may be made to the disclosed solution without departing from the scope of the present invention as defined in the appended claims.

## Claims

1. A method for engineering and operating a system comprising of one or more remotely-controlled and stationary and moveable cameras in an industrial installation and means for remotely moving the camera to point and focus on a object of interest, and means for displaying an image of the process object, the method comprising the steps of: -registering input of a selected object of interest
- using a 3D-model comprising the industrial installation and positions of the cameras including information about movement ranges of the cameras,
- calculating line of sight between a camera at a defined position in space and an object at a defined position in space using the 3D-model and stored information on available field of view and range of movement per camera, and
- automatically determining which one or more cameras (1, 2) are or can be moved to be in line of sight of a selected object of interest,
**characterized by** automatically selecting and steering the camera to view the object of interest on the occurrence of a pre-determined event or alarm coupled to the object of interest.

2. A method according to claim 1, comprising the further step of determining what camera movements and pan, tilt, zoom and focus settings are required in order for at least one of said one or more cameras to focus on the selected object.

3. A method according to claim 2, comprising the further step of ranking one or more cameras in line of sight of the selected object.

4. A method according to claim 2 or 3, comprising the further step of an operator request, moving the camera to point and focus on the selected object of interest.

5. A method according to claim 4, comprising the further step of recording the live video stream of the process object, or displaying it to an operator.

6. A method according to claim 5, comprising the further step of displaying the live video stream or image of the process object, to an operator or other authorised user at a second location or at a location remote from the installation.

7. A method according to claim 2 or 3, comprising the further step of storing in a list information for each process object the one or more cameras determined to be in line of sight of the process object, together with the control information necessary to move each of the one or more cameras to point and focus on the object.

8. A method according to any previous claim, comprising the further step of calculating what operations such as pan, zoom or tilt movements are necessary for each of the one or more cameras in line of sight to focus on the object.

9. A method according to claim 8, comprising the further step of calculating what movements of a crane or other moveable device with a camera arranged thereon, or along on rail, are necessary for each of the one or more cameras in line of sight to focus on the object.

10. A method according to any previous claim, comprising the further step of generating control signals to operate one or more cameras to focus on said process object and display a video stream or make an image of it.

11. A method according to any previous claim, wherein the selected object (C) of interest in an industrial installation is a process object, an equipment of process section in the industrial installation or any other object presently located in or moving through the installation, and by automatically determining one or more cameras (1, 2) which are in line of sight of the object, and moving the camera to point and focus on the object of interest, and displaying an image or a video stream of the object.

12. A method according to any previous claim, comprising the further step of monitoring a process object in an industrial plant with one or more processes by means of automatically moving a camera (1, 2) to focus on the selected process object (C) for control purposes.

13. A method according to claim 1 or 11, comprising the further step of registering one or more images or live video streams made of said process object and providing a display to a control system said process object is controlled by.

14. A method according claim 1 or 10, comprising the further step saving one or more images made of said process object in a database together with data associated with said process object and/or an event or alarm or process condition.

15. A method according to any previous claim, comprising the further step of calculating in real time which of the one or more cameras are in line of sight to an object of interest.

16. A method according to any previous claim, comprising the further step of calculating one or more lines of sight to an object of interest and calculating where a camera should be positioned in order to make an image or live video of the object of interest.

17. A control system for operating one or more remotely-controlled moveable and stationary cameras in an industrial installation, comprising means for remotely moving the camera to point and focus on an object of interest and means for displaying an image of the process object, means to register input of a selection of a said object (C) of interest in said industrial installation, and means for determining line of sight between a camera at a defined position in space and an object at a defined position in space from a 3-D model comprising the industrial installation and a known position of one or more cameras (1, 2) including information about movement ranges of the cameras, means for automatically determining which one or more cameras (1, 2) are or can be moved to be in line of sight of a selected object of interest **characterized in that** the means for remotely moving the camera to point and focus on an object of interest comprises means for selecting and steering the camera to view the object of interest on the occurrence of a pre-determined event or alarm coupled to the object of interest.

18. A control system according to claim 17, further comprising means to operate and move a crane or other moveable device arranged with a camera mounted on the moveable device.

19. A control system according to claim 17, further comprising a memory storage device including one or more computer programs comprising software code elements which when read into a computer or processor will cause said control system to carry out the method according to any of claims 1-16.

20. A control system according to claim 17, further comprising an interface for selecting an object of interest presently in an industrial installation to automatically be displayed as in live video format and/or an image to be made of it.

## Patentansprüche

1. Ein Verfahren zum technischen Ausführen und Betreiben eines Systems, welches eine oder mehrere ferngesteuerte und stationäre und bewegliche Kameras in einer Industrieanlage und Mittel zum aus der Ferne Bewegen der Kamera, um auf ein Objekt von Interesse zu zeigen und zu fokussieren, und Mittel zum Ausgeben eines Bildes des Prozessobjekts umfasst, wobei das Verfahren die Schritte umfasst:
- Registrieren von Eingabe eines ausgewählten Objekts von Interesse,
- Verwenden eines 3D-Models, welches die Industrieanlage und die Positionen der Kameras einschließlich Information über Bewegungsbereiche des Kameras umfasst,
- Berechnen der Sichtlinie zwischen einer Kamera an einer definierten Position im Raum und einem Objekt an einer definierten Position im Raum unter Verwendung des 3D-Models und gespeicherter Information über verfügbare Sichtfelder und Bewegungsbereiche pro Kamera, und
- automatisches Bestimmen, welche eine oder mehreren Kameras (1, 2) in Sichtline eines ausgewählten Objekts von Interesse sind oder dorthin bewegt werden können,
**gekennzeichnet durch**
- automatisches Auswählen und Steuern der Kamera, um das Objekt von Interesse zu inspizieren beim Auftreten eines vorbestimmten Ereignisses oder Alarms, das/der an das Objekt von Interesse gekoppelt ist.

2. Ein Verfahren nach Anspruch 1, welches den weiteren Schritt umfasst: Bestimmen, welche Kamerabewegungen und Schwenk-, Neige- , Zoom- und Fokuseinstellungen erforderlich sind, damit mindestens eine der einen oder mehreren Kameras auf das ausgewählte Objekt fokussieren kann.

3. Ein Verfahren nach Anspruch 2, welches den weiteren Schritt umfasst: einen Rang Zuweisen an eine oder mehrere Kameras in Sichtlinie des ausgewählten Objekts.

4. Ein Verfahren nach einem der Ansprüche 2 oder 3, welches den weiteren Schritt eines Bedieneraufrufs zum Bewegen der Kamera umfasst, um auf das ausgewählte Objekt von Interesse zu zeigen und zu fokussieren.

5. Ein Verfahren nach Anspruch 4, welches den weiteren Schritt umfasst: Aufzeichnen des Live-Videodatenstroms des Prozessobjekts oder Ausgeben desselben an einen Bediener.

6. Ein Verfahren nach Anspruch 5, welches den weiteren Schritt umfasst: Ausgeben des Live-Videodatenstroms oder Bildes des Prozessobjekts an einen Bediener oder anderen autorisierten Nutzer an einer zweiten Örtlichkeit oder an einer von der Anlage entfernten Örtlichkeit.

7. Ein Verfahren nach Anspruch 2 oder 3, welches den weiteren Schritt umfasst: in einer Liste Speichern von Information für jedes Prozessobjekt, welches die eine oder mehreren Kameras als sich in Sichtlinie mit dem Prozessobjekt befindend bestimmt haben, zusammen mit der Kontrollinformation, die notwendig ist, um jede der einen oder mehreren Kameras zu bewegen, um auf das Objekt zu zeigen und zu fokussieren.

8. Ein Verfahren nach einem der vorhergehenden Ansprüche, welches den weiteren Schritt umfasst: Berechnen, welche Vorgänge wie z.B. Schwenk-, Zoom- oder Neigebewegungen für jede der einen oder mehreren Kameras in Sichtlinie notwendig sind, um auf das Objekt zu fokussieren.

9. Ein Verfahren nach Anspruch 8, welches den weiteren Schritt umfasst: Berechnen, welche Bewegungen eines Krans oder anderen bewegbaren Gerätes mit darauf angeordneter Kamera, oder entlang auf Schienen, für jede der einen oder mehreren Kameras in Sichtlinie notwendig sind, um auf das Objekt zu fokussieren.

10. Ein Verfahren nach einem der vorhergehenden Ansprüche, welches den weiteren Schritt umfasst: Erzeugen eines Kontrollsignals, um eine oder mehrere Kameras zu bedienen, um auf das Prozessobjekt zu fokussieren und einen Videodatenstrom auszugeben oder ein Bild davon zu machen.

11. Ein Verfahren nach einem der vorhergehenden Ansprüche, wobei das ausgewählte Objekt von Interesse (C) in einer Industrieanlage ein Prozessobjekt, eine Ausrüstung eines Prozessabschnitts in der Industrieanlage oder irgendein anderes Objekt ist, das sich gegenwärtig in der Anlage befindet oder sich hindurchbewegt, und durch automatisches Bestimmen einer oder mehrerer Kameras (1, 2), die in Sichtlinie des Objekts sind, und Bewegen der Kamera, um auf das Objekt von Interesse zu zeigen und zu fokussieren, und Ausgeben eines Bildes oder Videodatenstroms des Objekts.

12. Ein Verfahren nach einem der vorhergehenden Ansprüche, welches den weiteren Schritt umfasst: Überwachen eines Prozessobjekts in einer Industrieanlage mit einem oder mehreren Prozessen mittels automatischen Bewegens einer Kamera (1, 2), um auf das ausgewählte Prozessobjekt (C) für Kontrollzwecke zu fokussieren.

13. Ein Verfahren nach einem der Ansprüche 1 oder 11, welches den weiteren Schritt umfasst: Registrieren eines oder mehrerer Bilder oder Live-Videodatenströme, die von dem Prozessobjekt gemacht sind, und Bereitstellen einer Ausgabe an ein Kontrollsystem, durch welches das Prozessobjekt kontrolliert wird.

14. Ein Verfahren nach Anspruch 1 oder 10, welches weiter den Schritt umfasst: Speichern eines oder mehrerer von dem Prozessobjekt gemachter Bilder in einer Datenbank zusammen mit Daten, die mit dem Prozessobjekt und/oder einem Ereignis oder Alarm oder Prozessbedingung assoziiert sind.

15. Ein Verfahren nach einem der vorhergehenden Ansprüche, welches den weiteren Schritt umfasst: in Echtzeit Berechnen, welche der einen oder mehreren Kameras in Sichtlinie zu einem Objekt von Interesse sind.

16. Ein Verfahren nach einem der vorhergehenden Ansprüche, welches den weiteren Schritt umfasst: Berechnen einer oder mehrerer Sichtlinien zu einem Objekt von Interesse und Berechnen, wo eine Kamera positioniert werden sollte, um ein Bild oder Live-Video des Objekts von Interesse zu machen.

17. Ein Kontrollsystem zum Betreiben einer oder mehrerer ferngesteuerter und beweglicher und stationärer Kameras in einer Industrieanlage, welches umfasst: Mittel zum aus der Ferne Bewegen der Kamera, um auf ein Objekt von Interesse zu zeigen und zu fokussieren, und Mittel zum Ausgeben eines Bildes des Prozessobjekts, Mittel zum Registrieren von Eingabe einer Auswahl des Objekts von Interesse (C) in der Industrieanlage und Mittel zum Sichtlinienbestimmen zwischen einer Kamera an einer definierten Position im Raum und einem Objekt an einer definierten Position im Raum aus einem 3D-Modell, welches die Industrieanlage und eine bekannte Position der einen oder mehreren Kameras (1, 2) einschließlich Information über Bewegungsbereiche der Kameras umfasst, Mittel zum automatischen Bestimmen, welche der einen oder mehreren Kameras (1, 2) in Sichtlinie eines ausgewählten Objekts von Interesse sind oder dorthin bewegt werden können, **dadurch gekennzeichnet, dass** das Mittel zum aus der Ferne Bewegen der Kamera, um auf das Objekt von Interesse zu zeigen und zu fokussieren, Mittel umfasst zum Auswählen und Steuern der Kamera, um das Objekt von Interesse zu inspizieren beim Auftreten eines vorbestimmten Ereignisses oder Alarms, das/der an das Objekt von Interesse gekoppelt ist.

18. Ein Kontrollsystem nach Anspruch 17, welches weiter Mittel umfasst, einen Kran zu bedienen und zu bewegen oder ein anderes bewegbares Gerät, das mit einer Kamera angeordnet ist, die auf dem bewegbaren Gerät angebracht ist.

19. Ein Kontrollsystem nach Anspruch 17, welches weiter ein Speichergerät umfasst, das eines oder mehrere Computerprogramme umfasst, welche Softwarecodeelemente umfassen, die, wenn sie in einen Computer oder Prozessor gelesen sind, das Kontrollsystem veranlassen, das Verfahren nach einem der Ansprüche 1-16 auszuführen.

20. Ein Kontrollsystem nach Anspruch 17, welches weiter ein Interface umfasst zum Auswählen eines in einer Industrieanlage gegenwärtigen Objekts von Interesse, um automatisch als Live-Videoformat und/oder als ein davon zu machendes Bild ausgegeben zu werden.

## Revendications

1. Procédé de gestion et de mise en oeuvre d'un système comprenant une ou plusieurs caméras fixes et mobiles commandées à distance dans une installation industrielle et un moyen pour mouvoir à distance la caméra pour pointer et focaliser sur un objet d'intérêt, et un moyen pour afficher une image de l'objet du processus, le procédé comprenant les étapes consistant à :
- enregistrer l'entrée d'un objet d'intérêt sélectionné,
- utiliser un modèle 3D comprenant l'installation industrielle et les positions des caméras, y compris des informations sur les plages de mouvement des caméras,
- calculer la ligne visuelle entre une caméra en une position définie dans l'espace et un objet en une position définie dans l'espace en utilisant le modèle 3D et des informations mémorisées sur le champ de vision et la plage de mouvement disponibles pour chaque caméra, et
- déterminer automatiquement quelle ou quelles caméras (1, 2) sont ou peuvent être actionnées pour être en ligne visuelle d'un objet d'intérêt sélectionné,
**caractérisé par** le fait de sélectionner et orienter automatiquement la caméra pour voir l'objet d'intérêt lorsque se produit un évènement ou alarme prédéterminé(e) couplé(e) à l'objet d'intérêt.

2. Procédé selon la revendication 1, comprenant l'étape supplémentaire consistant à déterminer quels mouvements de caméra et réglages de panoramique, inclinaison, zoom et mise au point sont nécessaires pour qu'au moins l'une desdites caméras focalise sur l'objet sélectionné.

3. Procédé selon la revendication 2, comprenant l'étape supplémentaire consistant à ranger une ou plusieurs caméras en ligne visuelle de l'objet sélectionné.

4. Procédé selon la revendication 2 ou 3, comprenant l'étape supplémentaire d'une demande d'opérateur actionnant la caméra pour pointer et focaliser sur l'objet d'intérêt sélectionné.

5. Procédé selon la revendication 4, comprenant l'étape supplémentaire consistant à enregistrer le flux vidéo en direct de l'objet de processus, ou à l'afficher pour un opérateur.

6. Procédé selon la revendication 5, comprenant l'étape supplémentaire consistant à enregistrer le flux vidéo en direct ou l'image de l'objet de processus, à un opérateur ou autre utilisateur autorisé en un deuxième endroit ou en un endroit distant de l'installation.

7. Procédé selon la revendication 2 ou 3, comprenant l'étape supplémentaire consistant à stocker dans une liste des informations pour chaque objet de processus pour la ou les caméras dont on a déterminé qu'elles sont en ligne visuelle de l'objet de processus, en même temps que l'information de commande nécessaire pour actionner chacune des caméras pour pointer et focaliser sur l'objet.

8. Procédé selon l'une quelconque des revendications précédentes, comprenant l'étape supplémentaire consistant à calculer quelles opérations telles que des mouvements de panoramique, de zoom ou d'inclinaison sont nécessaires pour chacune des caméras en ligne visuelle pour focaliser sur l'objet.

9. Procédé selon la revendication 8, comprenant l'étape supplémentaire consistant à calculer quels mouvements d'une grue ou autre dispositif mobile sur lequel est placée une caméra, ou le long d'un rail, sont nécessaires pour chacune des caméras en ligne visuelle pour focaliser sur l'objet.

10. Procédé selon l'une quelconque des revendications précédentes, comprenant l'étape supplémentaire consistant à générer des signaux de commande pour actionner une ou plusieurs caméras pour focaliser sur ledit objet de processus et afficher un flux vidéo ou en faire une image.

11. Procédé selon l'une quelconque des revendications précédentes, dans lequel l'objet d'intérêt sélectionné (C) dans une installation industrielle est un objet de processus, un équipement de section de processus dans l'installation industrielle ou tout autre objet se trouvant ou se déplaçant dans l'installation, et par la détermination automatique d'une ou de plusieurs caméras (1, 2) qui sont en ligne visuelle avec l'objet, et actionner la caméra pour pointer et focaliser sur l'objet d'intérêt, et afficher une image ou un flux vidéo de l'objet.

12. Procédé selon l'une quelconque des revendications précédentes, comprenant l'étape supplémentaire consistant à surveiller un objet de processus dans une usine industrielle comportant un ou plusieurs processus au moyen d'un actionnement automatique d'une caméra (1, 2) pour focaliser sur l'objet de processus sélectionné (C) aux fins de commande.

13. Procédé selon la revendication 1 ou 11, comprenant l'étape supplémentaire consistant à enregistrer une ou plusieurs images ou flux vidéo en direct dudit objet de processus et à fournir un affichage à un système de commande par lequel ledit objet de processus est commandé.

14. Procédé selon la revendication 1 ou 10, comprenant l'étape supplémentaire consistant à sauvegarder une ou plusieurs images prises dudit objet de processus dans une base de données en même temps que des données associées audit objet de processus et/ou un évènement ou alarme ou condition de processus.

15. Procédé selon l'une quelconque des revendications précédentes, comprenant l'étape supplémentaire consistant à calculer en temps réel quelles caméras sont en ligne visuelle avec un objet d'intérêt.

16. Procédé selon l'une quelconque des revendications précédentes, comprenant l'étape supplémentaire consistant à calculer une ou plusieurs lignes visuelles vers un objet d'intérêt et à calculer où une caméra doit être positionnée afin de prendre une image ou une vidéo en direct de l'objet d'intérêt.

17. Système de commande pour actionner une ou plusieurs caméras mobiles ou fixes commandées à distance dans une installation industrielle, comprenant un moyen pour actionner à distance la caméra pour pointer et focaliser sur un objet d'intérêt et un moyen pour afficher une image de l'objet de processus, un moyen pour enregistrer l'entrée d'une sélection d'un dit objet d'intérêt (C) dans ladite installation industrielle, et un moyen pour déterminer la ligne visuelle entre une caméra en une position définie dans l'espace et un objet en une position définie dans l'espace à partir d'un modèle 3D comprenant l'installation industrielle et une position connue d'une ou plusieurs caméras (1, 2), y compris des informations sur les plages de mouvements des caméras, un moyen pour déterminer automatiquement lesquelles des caméras (1, 2) sont ou peuvent être actionnées pour être en ligne visuelle avec un objet d'intérêt sélectionné, **caractérisé en ce que** le moyen pour actionner à distance la caméra pour pointer et focaliser sur un objet d'intérêt comprend un moyen pour sélectionner et orienter la caméra pour voir l'objet d'intérêt lorsque se produit un évènement ou alarme prédéterminé(e) couplé(e) à l'objet d'intérêt.

18. Système de commande selon la revendication 17, comprenant en outre un moyen pour actionner et déplacer une grue ou autre dispositif mobile sur lequel est montée une caméra.

19. Système de commande selon la revendication 17, comprenant en outre un dispositif de stockage de mémoire incluant un ou plusieurs programmes informatiques comprenant des éléments de code logiciel qui, quand ils sont lus dans un ordinateur ou un processeur, font exécuter par ledit système de commande le procédé de l'une quelconque des revendications 1 à 16.

20. Système de commande selon la revendication 17, comprenant en outre une interface pour sélectionner un objet d'intérêt se trouvant dans une installation industrielle pour l'afficher automatiquement en format vidéo en direct et/ou sous la forme d'une image à prendre de celui-ci.
